# DEMANDE DE BREVET EUROPEEN

(11) **EP 1 643 144 A1**
(43) Date de publication de la demande: **05.04.2006**
(21) Numéro de dépôt: 05300782.9
(22) Date de dépôt: 28.09.2005
(51) Int. Cl.: F16D 13/52, F16D 25/063, F16D 25/10

(54) **DOUBLE EMBRAYAGE HUMIDE POUR MOTEUR DE VEHICULE AUTOMOBILE**

(30) Priorité: 29.09.2004 FR 0410320
(71) Demandeur: Renault, 92109 Boulogne Billancourt (FR)
(72) Inventeur: LELEU, Mathieu, 92000, NANTERRE (FR); PARTHUISOT, Jean-Pierre, 92000, NANTERRE (FR)

(57) **Abrégé**

Ce double embrayage humide pour moteur de véhicule automobile, comportant un embrayage extérieur comprenant une cloche extérieure (30) à jupe (33) cannelée axialement qui entraîne, au travers d'ensembles de disques de friction (50), une cloche intérieure (51), un flasque d'entraînement (23) cinématiquement lié à la sortie de puissance d'un moteur entraînant la cloche extérieure (30) grâce à ses cannelures (32), est caractérisé en ce que ledit flasque d'entraînement (23) est centré par rapport à la cloche extérieure (30) de l'embrayage extérieure du double embrayage, grâce à une jupe intérieurement lisse (25) qui vient coiffer les cannelures de la jupe (33).

## Description

L'invention concerne un double embrayage humide pour moteur de véhicule automobile. Le document EP 1 174 633 de SACHS fait connaître le concept général du double embrayage humide.

L'entrée du couple moteur dans un double embrayage d'entrée se fait typiquement par l'intermédiaire d'un flasque dit flasque d'entraînement qui fait office de lien entre les cannelures du secondaire de l'amortisseur, recevant la puissance du moteur, et la cloche extérieure de l'embrayage extérieur du double embrayage.

De nombreuses fonctions périphériques peuvent venir se greffer au flasque d'entraînement. Ces fonctions peuvent imposer des contraintes de coaxialité, de rotulage, d'excentricité et de débattement axial du flasque d'entraînement par rapport au carter d'embrayage et différentiel (CED) de la boîte de vitesse.

Il convient alors d'assurer un centrage précis et un arrêt axial du flasque d'entraînement par rapport à un élément de la chaîne cinématique du double embrayage.

Pour permettre des opérations de maintenance portant sur des éléments internes au double embrayage humide, la liaison entre le flasque d'entraînement et la cloche extérieure de l'embrayage extérieur doit être démontable.

Le brevet EP 1 422 430 fait connaître un système de centrage de la cloche sur le flasque d'entraînement. Le centrage entre le flasque d'entraînement et la cloche extérieure de l'embrayage extérieur est court. Le rotulage entre les deux pièces ainsi que l'excentricité à bas régime de rotation sont alors importants et parfois rédhibitoires au regard d'autres fonctions liées au flasque d'entraînement, comme l'étanchéité.

La Demanderesse a connaissance d'une solution dans laquelle le centrage du flasque se fait par rapport à la tôle de support du joint, le flasque d'entraînement et la cloche extérieure de l'embrayage extérieur étant soudés entre eux. Le système de soudage est donc indémontable sans destruction des pièces soudées. De plus l'obtention d'un centrage précis par un processus de soudure est délicate à mettre au point.

Le but de l'invention est de proposer une solution de centrage du flasque d'entraînement ne présentant pas ces inconvénients.

L'invention atteint son but grâce à un double embrayage humide comportant un embrayage extérieur comprenant une cloche extérieure qui entraîne, au travers d'ensembles de disques de friction, une cloche intérieure, un flasque d'entraînement cinématiquement lié à la sortie de puissance d'un moteur entraînant la cloche extérieure grâce à des cannelures, caractérisé en ce que ledit flasque d'entraînement est centré par rapport à la cloche extérieure de l'embrayage extérieur du double embrayage, en coiffant celle-ci.

Cette même cloche extérieure est centrée et arrêtée axialement par rapport au carter embrayage et différentiel (CED) de la boîte de vitesse, l'ensemble étant démontable.

Le centrage du flasque d'entraînement par rapport à la cloche extérieure se fait donc par rapport à la même référence que la tôle de maintien du joint (tôle de fermeture) : ceci est favorable à l'obtention d'une chaîne de cotes de l'excentration de la piste du joint avec un intervalle de tolérance faible.

Comme dans les dispositifs connus, la cloche extérieure présente une jupe ou surface cylindrique de plus grand diamètre extérieur, présentant des cannelures axiales destinées à l'engrènement du flasque d'entraînement : celui-ci comporte à cet effet des cannelures ou crans d'engrènement prévus sur certaines zones périphériques de sa face verticale.

Mais, selon l'invention, le flasque d'entraînement comporte avantageusement une face frontale raccordée à sa périphérie à une jupe extérieure cylindrique destinée à coiffer la jupe cannelée de la cloche extérieure pour réaliser le centrage. Avantageusement, cette jupe du flasque d'entraînement est lisse intérieurement et vient se monter sur les cannelures extérieures de la jupe cannelée de la cloche par un ajustement glissant. Avantageusement, les cannelures extérieures de la jupe cannelée comportent des bourrelets de rectification, permettant une rectification plus facile.

Avantageusement, des ouvertures formées dans le flasque d'entraînement à certains endroits de la périphérie de sa face frontale permettent la formation desdits crans d'engrènement destinés à engrener avec les cannelures intérieures de la jupe cannelée de la cloche extérieure.

L'arrêt axial du flasque d'entraînement par rapport à la cloche extérieure de l'embrayage extérieur est assuré par un anneau d'arrêt. Avantageusement, des ouvertures formées dans le flasque d'entraînement à certains endroits de la périphérie de sa face frontale, de préférence les mêmes ouvertures que précédemment, permettent le passage de languettes solidaires de la cloche extérieure sur lesquelles est fixé l'anneau d'arrêt axial du flasque d'entraînement par rapport à la cloche. Pour répondre à une contrainte de déplacement axial spécifié entre le flasque d'entraînement et la cloche extérieure de l'embrayage extérieur, l'arrêt axial peut être calé par l'utilisation d'un jeu d'anneaux d'arrêt calibrés.

Avantageusement, le plateau d'appui coopérant avec les disques de friction est bloqué axialement par un anneau d'arrêt maintenu dans des gorges réalisées dans la cloche extérieure de l'embrayage extérieur. Ces gorges peuvent être réalisées dans l'intégralité des crans de la cloche ou de manière partielle seulement comme on le verra dans la description qui suivra.

La cannelure intérieure du flasque d'entraînement destinée à sa liaison cinématique avec l'organe moteur peut présenter une retenue annulaire ainsi qu'un perçage axial permettant la captation d'une partie de l'huile centrifugée et son cheminement vers le joint d'étanchéité en entrée de boîte.

Avantageusement, les jupes du flasque d'entraînement et de la cloche extérieure de l'embrayage extérieur présentent des trous, par exemple oblongs, disposés sur la partie commune de centrage et qui permettent l'évacuation radiale de l'huile de refroidissement de l'ensemble de friction.

Grâce à l'invention, le système de centrage entre le flasque d'entraînement et la cloche extérieure de l'embrayage extérieur est entièrement démontable et ceci de manière très simple par retrait de l'anneau d'arrêt du flasque d'entraînement. Cette opération requiert un outillage très simple (pince de montage de l'anneau d'arrêt intérieur) et peut être réalisée par un personnel peu qualifié.

Le système de centrage entre le flasque d'entraînement et la cloche extérieure de l'embrayage extérieur est réutilisable après démontage. Il peut simplement nécessiter un changement de l'anneau d'arrêt du flasque d'entraînement si celui-ci a été endommagé lors du démontage.

La longueur du centrage entre le flasque d'entraînement et la cloche extérieure de l'embrayage extérieur réalise un centrage long entre les deux pièces et permet ainsi de limiter leur rotulage. Un rotulage faible est une caractéristique appréciée pour le bon fonctionnement du joint d'étanchéité en entrée de boîte.

La rectification des crans extérieurs de la cloche extérieure de l'embrayage extérieur et la rectification du diamètre intérieur de flasque d'entraînement permettent d'assurer un ajustement précis entre ces deux pièces.

La transmission du couple moteur par le flasque d'entraînement se faisant par l'intermédiaire de crans d'engrènement ou cannelures disposées sur sa face avant, la partie cylindrique ou jupe du flasque d'entraînement servant au centrage est avantageusement lisse, comme il a été déjà mentionné : elle n'a pas besoin de comporter des cannelures qui se prendraient dans des cannelures de la cloche extérieure de l'embrayage extérieur pour transmettre le couple sur sa périphérie. Le fait que la jupe du flasque d'entraînement servant au centrage avec la cloche extérieure de l'embrayage extérieur soit lisse permet de rectifier le diamètre intérieur du flasque d'entraînement par une procédé simple et donc à moindre coût.

Comme indiqué plus haut, des bourrelets réalisés sur les bosses des cannelures extérieures de la jupe de la cloche extérieure de l'embrayage extérieur permettent une rectification sur quelques dixièmes de millimètres en ne cassant les fibres de la cloche que de manière très localisée. Ainsi, le relâchement de contraintes dans la cloche est minimisé. On minimise aussi de fait la dégradation de la tenue mécanique de la cloche extérieure de l'embrayage extérieur.

Le flasque d'entraînement emboîté sur la cloche extérieure de l'embrayage extérieur en limite l'ouverture par centrifugation. Cela a pour effet de limiter les contraintes internes à la cloche extérieure de l'embrayage extérieur. De plus la légère ouverture de la cloche extérieure de l'embrayage extérieur permise par l'ajustement glissant entre la cloche extérieure de l'embrayage extérieur et le flasque d'entraînement permet un auto-centrage des deux pièces à partir du régime de rotation suffisant pour provoquer cette même ouverture.

D'autres caractéristiques et avantages de l'invention apparaîtront à la lecture d'un mode de réalisation de l'invention. On se référera aux dessins annexés sur lesquels :

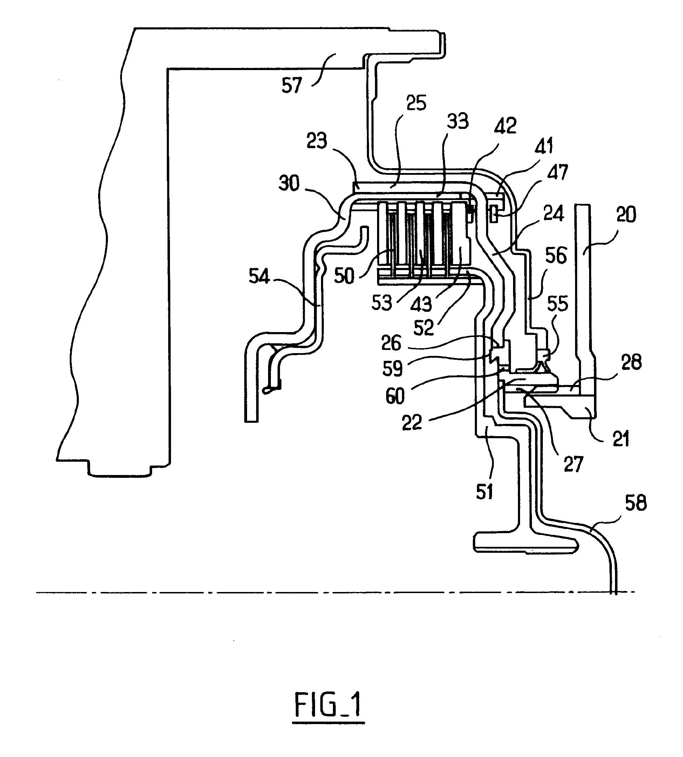

- La figure 1 montre schématiquement en demi-coupe partielle un dispositif d'embrayage double humide conforme à l'invention,

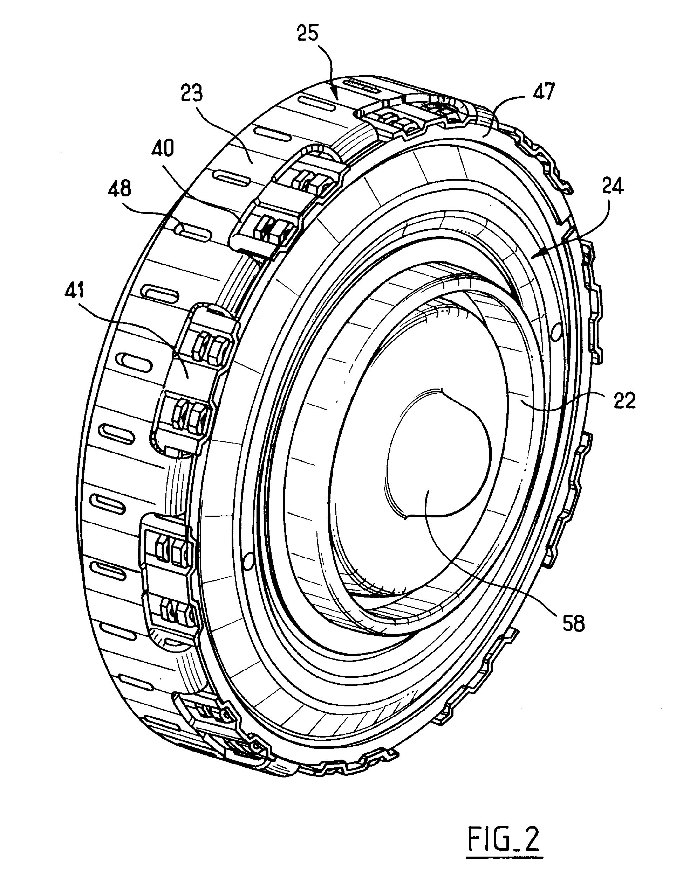

- La figure 2 montre en perspective le flasque d'entraînement en prise sur la cloche extérieur de l'embrayage extérieur,

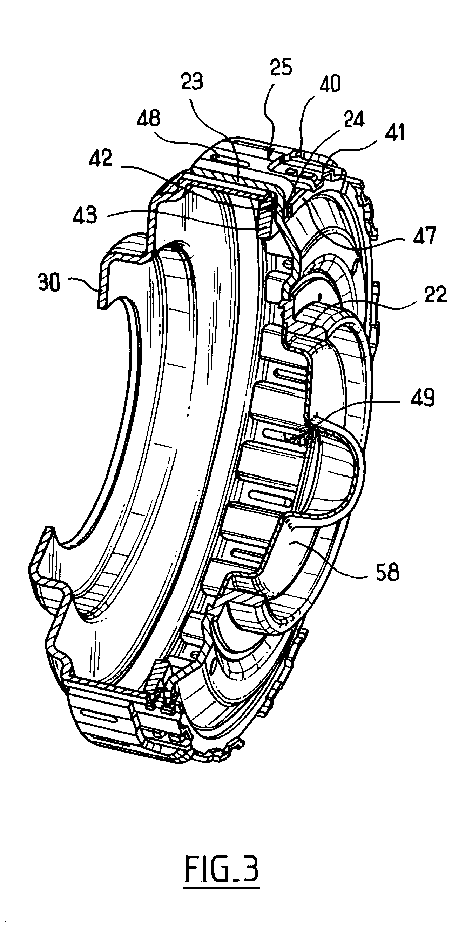

- La figure 3 est une vue analogue à la figure 2 avec arrachement partiel et sous un angle de perspective légèrement différent,
- La figure 4 est une vue de détail de la partie supérieure périphérique de la figure 3, sous un angle légèrement modifié,
- La figure 5 est une vue latérale de ce même détail de la figure 4, et sans l'anneau d'arrêt du flasque d'entraînement,
- La figure 6 montre en perspective la cloche extérieure de l'embrayage extérieur et les deux anneaux d'arrêt,
- La figure 7 est un schéma en coupe axiale partielle de la périphérie à cannelure de la cloche extérieure de l'embrayage extérieur,

On pourra se reporter au document EP 0 174 633 pour une description générale et complète d'un embrayage double humide. Pour les besoins de la présente description, on se contentera de montrer et décrire l'embrayage extérieur de l'embrayage double et les principaux organes intervenant dans l'invention, à savoir le flasque d'entraînement 23 qui entraîne la cloche extérieure 30 de l'embrayage extérieure, laquelle, au travers des ensembles de disques ou lamelles 50, 53, entraîne la cloche intérieure 51 de l'embrayage extérieur.

La puissance du moteur transite par le secondaire de l'amortisseur 20 (en variante: double volant amortisseur) et utilise la liaison cannelée réalisée par la cannelure 21 du secondaire de l'amortisseur 20, qui est soudée au secondaire de l'amortisseur 20, et la cannelure 22 du flasque d'entraînement 23 pour entrer au primaire du double embrayage humide.

Le flasque d'entraînement 23 présente une paroi frontale formant un disque sensiblement vertical 24, bordée à l'extérieur par une paroi cylindrique périphérique de centrage 25 et ménageant à l'intérieur une ouverture centrale 26.

La cannelure 22 du flasque d'entraînement 23 est soudée au flasque d'entraînement 23 sur sa paroi verticale 24. Elle forme un anneau soudé sur l'ouverture centrale 26 et présentant une surface cylindrique axiale, femelle, cannelée 27 destinée à coopérer avec une surface cylindrique mâle cannelée 28 de la cannelure 21 du secondaire de l'amortisseur 20.

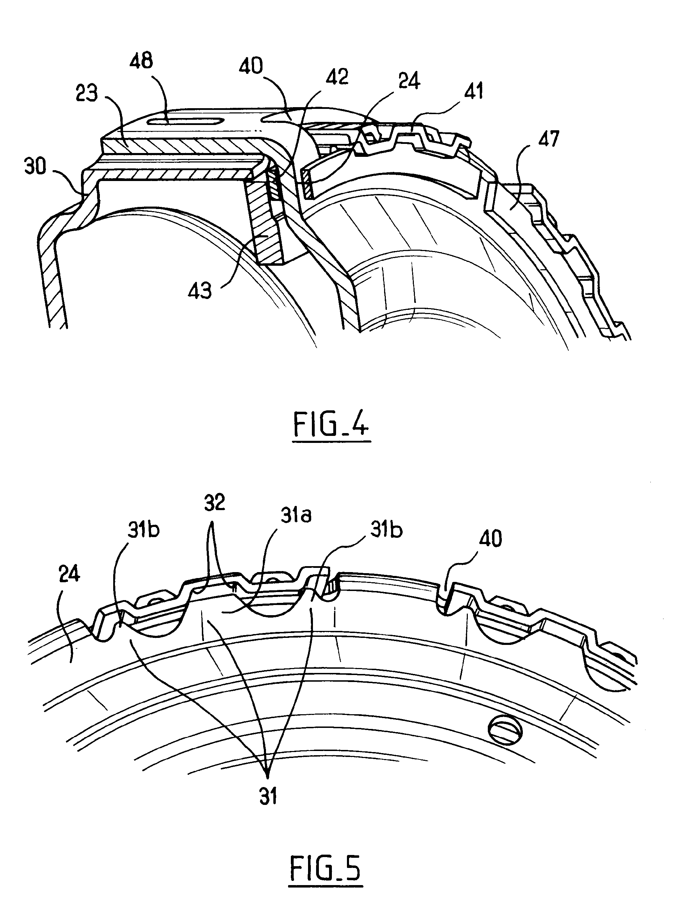

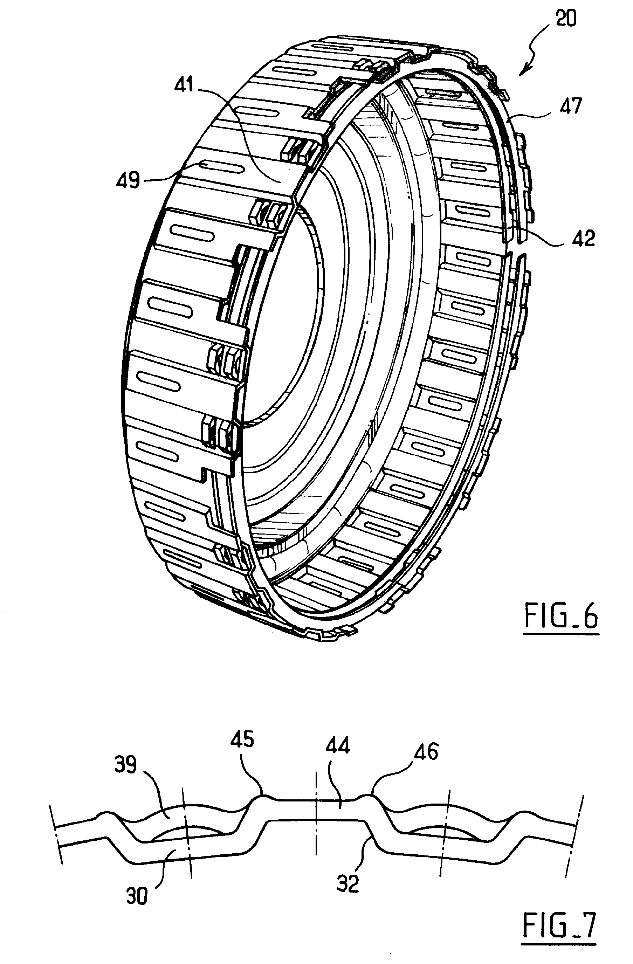

Le flasque d'entraînement 23 transmet la puissance à la cloche extérieure 30 de l'embrayage extérieur par l'intermédiaire de crans d'engrènement ou cannelures 31 présentes sur la face verticale 24 du flasque d'entraînement 23 (voir figure 5) qui prennent appui sur des cannelures 32 présentes sur la partie cylindrique extérieure ou jupe 33 de la cloche extérieure 30 de l'embrayage extérieur. Ces cannelures 32 sont aussi visibles sur la figure 7. Les cannelures sont formées par un relief cannelé de toute la jupe cylindrique cannelée 33 (avec éventuellement des interruptions sur certains intervalles), mais c'est la face intérieure de cette surface qui forme les gorges de cannelures 32 coopérant avec les crans 31 formés à certains endroits, dans des ouvertures oblongues 40, dans la face verticale 24 du flasque d'entraînement 23. Les crans 31 sont formés de crans 31a correspondant à la totalité d'une gorge de cannelure 32, et de crans 31b destinés seulement à prendre appui sur un côté seulement d'une telle gorge de cannelure 32.

Les ouvertures oblongues 40 du flasque d'entraînement 23, formées à cheval sur la jupe 25 et la face avant 24, sont angulairement équi-réparties et permettent le passage d'autant de languettes 41 présentes en dépassant sur l'extrémité de la jupe cylindrique 33 de la cloche extérieure 30 de l'embrayage extérieur et elles aussi angulairement équi-réparties. Ces languettes orientées axialement 41 permettent de loger l'anneau d'arrêt 42 du plateau d'appui 43 de l'embrayage extérieur et de bloquer axialement le déplacement potentiel du flasque d'entraînement 23 par un anneau d'arrêt 47.

Dans une variante non représentée, la gorge d'anneau d'arrêt du plateau d'appui peut se trouver entièrement sur la jupe 33 de la cloche extérieure 30 de l'embrayage extérieur et non partiellement dans les languettes 41 assurant ainsi une meilleure répartition des efforts impliquant une meilleure tenue mécanique de la pièce. Selon le besoin, le jeu axial du flasque d'entraînement peut être calé par une série d'anneaux d'arrêts calibrés.

Le flasque d'entraînement 23 coiffe le diamètre extérieur cannelé ou jupe cannelée 33 de la cloche extérieure 30 de l'embrayage extérieur sur toute la longueur axiale de la jupe 33. Le flasque d'entraînement 23 et la cloche extérieure 30 de l'embrayage extérieur sont montés avec un ajustement glissant. Un chanfrein sur la jupe cannelée extérieure 33 de la cloche extérieure 30 de l'embrayage extérieur permet un emmanchement aisé du flasque d'entraînement 23.

Selon la figure 7, chaque bosse 44 des cannelures extérieures de la jupe 33 de la cloche extérieure 30 de l'embrayage extérieur présente deux bourrelets de matière, respectivement de droite et de gauche 45, 46, disposés de manière symétrique à leurs extrémités droites et gauches. Le plus grand diamètre extérieur ou jupe 25 du flasque d'entraînement 23 servant au centrage avec la jupe cannelée 33 de la cloche extérieure 30 de l'embrayage extérieur est lisse intérieurement. La rectification des bourrelets 45, 46 des bosses 44 des cannelures extérieures de la cloche extérieure 30 de l'embrayage extérieur associée à la rectification du diamètre intérieur de la jupe cylindrique lisse 25 du flasque d'entraînement 23 permet d'assurer un ajustement précis entre ces deux pièces.

Le flasque d'entraînement 23 et la cloche extérieure 30 de l'embrayage extérieur présentent des trous oblongs 48, 49 disposés sur la partie commune de centrage (les jupes 33, 25) qui permettent l'évacuation radiale de l'huile de refroidissement de l'ensemble de friction.

Un ensemble de disques de friction garnis 50, cannelés sur leur diamètre intérieur, sont liés aux cannelures cylindriques 52 de la cloche intérieure 51 de l'embrayage extérieur.

Un ensemble de disques lisses 53, cannelés sur leur diamètre extérieur, sont liés aux cannelures de la cloche extérieure 30 de l'embrayage extérieur.

Un plateau d'appui 43, cannelé sur son diamètre extérieur, est également lié aux cannelures de la cloche extérieure 30 de l'embrayage extérieur.

L'anneau d'arrêt 42 du plateau d'appui 43 prend place dans la gorge 39 d'anneau d'arrêt de la cloche extérieure 30 de l'embrayage extérieur. Il permet d'offrir une réaction à l'effort de compression exercé par le piston 54 sur les disques lisses 53 et les disques garnis 50 afin de transmettre un couple entre la cloche extérieure 30 de l'embrayage extérieur et la cloche intérieure 51 de l'embrayage extérieur.

La cloche intérieure 51 de l'embrayage extérieur assure la sortie de puissance de l'embrayage extérieur du double embrayage humide.

Un joint d'étanchéité 55 en entrée de boîte est fixé sur une tôle de fermeture 56 liée au carter embrayage différentiel 57 et vient frotter au contact d'une piste de frottement aménagée sur la cannelure 27 du flasque d'entraînement 23.

Une tôle de fermeture 58 du flasque d'entraînement 23 est soudée à la cannelure 27 du flasque d'entraînement 23 dans sa partie inférieure et permet d'assurer l'étanchéité du double embrayage humide.

La cannelure 27 du flasque d'entraînement 23 présente une retenue annulaire 59 ainsi qu'un perçage axial 60 permettant la captation d'une partie de l'huile centrifugée et son cheminement vers le joint d'étanchéité 55 en entrée de boîte.

## Revendications

1. Double embrayage humide pour moteur de véhicule automobile, comportant un embrayage extérieur comprenant une cloche extérieure (30) à jupe (33) cannelée axialement qui entraîne, au travers d'ensembles de disques de friction (50), une cloche intérieure (51), un flasque d'entraînement (23) cinématiquement lié à la sortie de puissance d'un moteur entraînant la cloche extérieure (30) grâce à ses cannelures (32), **caractérisé en ce que** ledit flasque d'entraînement (23) est centré par rapport à la cloche extérieure (30) de l'embrayage extérieur du double embrayage, en coiffant celle-ci.

2. Double embrayage selon la revendication 1, **caractérisé en ce que** le flasque d'entraînement (23) comporte une face frontale (24) raccordée à sa périphérie à une jupe cylindrique (25) destinée à réaliser le centrage du flasque (23) sur la cloche extérieure (30).

3. Double embrayage selon la revendication 2, **caractérisé en ce que** la jupe cylindrique (25) du flasque d'entraînement (23) est lisse et coiffe la jupe cannelée (33) de la cloche extérieure (30).

4. Double embrayage selon la revendication 3, **caractérisé en ce que** les cannelures extérieures (44) de la jupe cannelée (33) comportent des bourrelets de rectification (45, 46).

5. Double embrayage selon l'une quelconque des revendications 2 à 4, **caractérisé en ce que** des ouvertures (40) formées dans le flasque d'entraînement (23) à certains endroits de la périphérie de sa face frontale (24) permettent la formation de crans d'engrènement (31) destinés à engrener avec les cannelures intérieures (32) de la jupe cannelée (33) de la cloche extérieure (30).

6. Double embrayage selon l'une quelconque des revendications 2 à 5, **caractérisé en ce que** des ouvertures (40) formées dans le flasque d'entraînement (23) à certains endroits de la périphérie de sa face frontale (24) permettent le passage de languettes (41) solidaires de la cloche extérieure (30) sur lesquelles est fixé un anneau (47) d'arrêt axial du flasque d'entraînement (23) par rapport à la cloche extérieure (30).

7. Double embrayage selon l'une quelconque des revendications 2 à 6, **caractérisé en ce que** la jupe (33) de la cloche (30) et la jupe (25) du flasque (23) comportent des trous (49) d'évacuation radiale d'huile.
